# EUROPEAN PATENT APPLICATION

(11) **EP 4 060 793 A2**
(43) Date of publication of application: **21.09.2022**
(21) Application number: 22159705.7
(22) Date of filing: 02.03.2022
(51) Int. Cl.: H01M 10/6567, H01M 10/657

(54) **BATTERY THERMAL MANAGEMENT SYSTEM**

(30) Priority: 18.03.2021 GB 202103787
(71) Applicant: Nobel Gemlik Otomotiv Sanayi Ve Ticaret Anonim Sirketi, Bursa (TR); Heat Trace Limited, Helsby, Frodsham Cheshire WA6 0DJ (GB)
(72) Inventor: ÖZYIGIT, Mehmet Emin, Warwickshire, CV311FN (GB); MUSSA, Riaz, Essex, IG11NH (GB); DALE, Thomas Paul, Warwickshire, CV214EJ (GB); HOWE, Peter Richard, Cheshire, WA4 5DR (GB)
(74) Representative: Yamankaradeniz, Kemal

(57) **Abstract**

This invention relates to an innovative type of battery (B) thermal management system intended to be used to heat the battery (B) modules (the battery (B) subcomponent formed by a combination of a certain number of battery cells (6)) of electric vehicles (EV), hybrid vehicles (Hybrid Electric Vehicle - HEV), plug-in hybrid electric vehicles (PHEV), Stationary Unit (Large Scale Grid Energy Storage) or other mobile or stationary systems using battery modules.

## Description

### Technical field

This invention relates to an innovative type of battery thermal management system to be used for controlled heating and cooling of the battery modules of an electric system such as electric vehicles (Electric Vehicle - EV), hybrid vehicles (Hybrid Electric Vehicle - HEV), plug-in hybrid electric vehicles (PHEV), Stationary Unit (Large Scale Grid Energy Storage) or other mobile or stationary systems using battery modules.

### Present state of the art

With the introduction of use of electricity in homes and industry, electricity has become an indispensable element in human life. Today, almost all tools are now operating with electricity. Most land vehicles are beginning to be powered by electricity. The efficiency of the batteries used to power electric vehicles is one of the most important topics studied today.

Due to efforts to control climate change, regulations have been implemented to limit the worldwide level of carbon dioxide (CO2) emissions, and they are getting tighter year on year. As a result, car manufacturers are having difficulties complying with these emissions values with the standard Internal Combustion Engine (ICE) most commonly used to power todays vehicles. Accordingly, the development and demand for vehicles in the market with some level of drivetrain electrification is increasing every day.

The battery modules used in most electric vehicles today comprise a Battery Thermal Management System (BTMS) to optimize efficiency. The main function of this system is to keep the battery module of the vehicle within the desired operating temperature range. The battery modules used in vehicles mostly consist of Lithium - Ion batteries. Li - Ion batteries need be maintained at approximately 27°C (specifically 26,7°C) to achieve optimum efficiency. At the same time, allowing the battery temperatures to reach 60°C and above can cause critical safety risks in the battery module called thermal runaway which can result in fire.

On the other hand, operating the batteries in the battery module in a cold environment, possibly with internal temperatures below zero, also causes significant reductions in battery efficiency and life. Especially considering the climate conditions in Northern European countries, battery efficiency and battery life, dependent on climate, may drop to around 50% of that expected otherwise.

In addition to the temperature control in the battery module, regulating the temperature distribution in the module is also an important issue. Maintaining a temperature difference between cells of less than 1 - 1.5°C and homogenizi ng the module temperature is one of the major goals of BTMS systems. Failure to do this can lead to premature degradation of some cells and overall reduction in battery capacity and longevity.

Due to the aforementioned efficiency and safety problems, BTMS are categorized into different types. Today, passive cooling systems and active cooling systems are used. Active cooling systems are also categorized depending on the type of fluid used. Air, water and water - glycol are commonly used.

The battery cooling requirement can be met by cycling the fluid through a heat exchanger / radiator. However, the heating requirement can be a little more challenging. This is because the systems used for heating increase the module weight, consume a lot of energy and their efficiency is typically low.

As mentioned above, different heating methods are used in today's electric vehicles battery systems. These methods are generally used to heat the batteries by means of an electrical resistance or Positive Temperature Coefficient (PTC) heater. PTC heaters are known to be frequently used in the industry.

In systems using PTC heaters, the fluid is heated by using electrical energy and resistance in a separate chamber and then put in motion by a pump via fluid channels, also used for cooling. However, in PTC systems, the chamber where the heating is done is physically separated from the battery and the fluid is carried to it via pipes, from which some heat will be lost. As a result of this, energy losses are high. Further, the weight of this chamber used for heating is relatively high. Weight reduction is a very important issue in the automotive industry and calculations take into account even a few grams. In this respect, a relative lightening of such a system is desirable. In addition, another negative aspect is the need for a control system. In order to determine that a heating operation must be performed, the general temperature of the battery cells or module must be controlled with an automatic control system and, depending on the need, it must activate the heating system and allow it to run. When the desired temperature is reached, it must then stop the heating process. All these operations must also be carried out continuously throughout the vehicle's charge and discharge periods. Therefore, both electronic and software infrastructures are needed in the control system.

### BRIEF DESCRIPTION OF THE INVENTION

The invention addresses the disadvantages described in the present state of the art and meets the needs.

The invention relates to an innovative type of battery thermal management system to be used for dynamically heating or cooling the battery modules of electric and hybrid electric vehicles.

In the BTMS of the invention, a self - regulating (SR) heating system is used for heating. Although these systems have been used in different applications and industries before, they have never been used in the automotive industry for battery heating.

Briefly about SR heating systems; simply there are two wires or metallic layers for electrical conductivity in the system. In between these two layers there is a polymer material containing carbon particles. The outer faces of the conductive layers may be sealed with standard insulating polymers. The electrical current required for heating is continuously applied to the conductive layers (usually using materials such as copper or aluminum). The carbon - doped polymer material between these two layers is heat sensitive and transmits electricity depending on its temperature. Globally, there is a linear drop in electricity transmitted typically between - 40°C and the maximum withstand temperature of the h eater, for example 100°C (these values being dependent of the nature of the polymer). When designed carefully and properly for a specific application, this gives the heater predictable thermal properties. In this way, the heat control of the battery module is automatically provided by the material. Additionally, SR systems can be produced as flat strips and placed directly inside the module, even directly adjacent to the cells. In this way, system heat losses are minimized. As a result, the system is both lighter compared to PTC systems and has advantages such as reduced energy consumption due to reduced losses and not requiring a control system. Due to the properties of the SR heaters, each contact point between the SR heater and the batteries will act as a separate heater and the battery pack will be heated homogeneously. Also, power consumption will decrease when the temperature of the batteries starts to increase without the need for a separate control system. A self-regulating system which is inherently temperature-safe (one which cannot under its own power exceed its own maximum exposure temperature), and which is formulated and designed to operate within the thermal requirements of the cell type does not require thermal controls for safety. However, they may be used to increase thermal efficiency if desired.

### Brief description of drawings

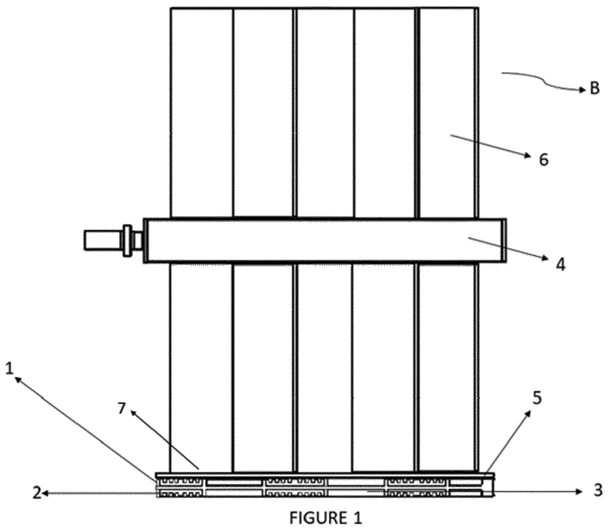

- Figure 1: A general view of the representation of the invention

### Reference list

- 1.: Extruded Plate
- 2.: Coolant Channels
- 3.: Self - Regulating Heater
- 4.: Manifold
- 5.: Thermal Interface Material
- 6.: Battery Cell
- 7.: BUSBAR (electrical power distribution cables)
- B.: Battery

### Detailed description of the invention

This invention is a type of battery (B) thermal management system comprises
- a coolant circuit passing through the battery cell assembly. This circuit is made of channels through which a fluid is able to flow. These channels being comprised of pipes, extruded aluminum plates or welded plates assemblies, for example. These make up the coolant channels (2). The circuit is able to evacuate all the heat when the cells are at higher temperature than necessary. This circuit can run in between the battery cells, in between groups of cells, on top and/or on bottom of cells, or in any combination of these arrangements. The fluid running through the channels is chosen for is thermal properties and durability, typically a mix of water/glycol (automotive coolant) or oil.
- a self - regulating heater (3) cable, permanently connected to the battery or other vehicle power source, that performs heating proportionately dependent upon the local temperature. The self-regulating heater will provide the necessary heat when below defined operating condition, for example 27°C, and stop when this temperature is obtained.
- a thermal interface material (5). This material is selected to have a very good thermal transfer properties and ensure good contact between the cooling channels and the cables with the cells. Adding this material, in the form of a compliant sheet or more typically a grease, avoids gaps between the channels, the cable and the cells resulting in loss of energy, air being an insulator.
**and characterized by comprising**
- coolant channels (2) through which the coolant fluid used for cooling functions in the complete battery assembly (B) is cycled to remove excess heat energy, wherein the temperature control is done by the cooperation between the heat provided by the self - regulating heater (3) and the coolant channels (2).

The parts that can be included in the system of the invention are described below:
The thermal interface material (5) is used as a transfer element utilized for transferring the energy generated by self - regulating heater (3) with the coolant fluid used for heating and cooling functions and the self - regulating heater (3) to the battery (B) or drawing heat energy from the battery (B). The objective is to ensure that heat is distributed evenly to the batteries. The thermal interface material (5) acts as a kind of heat emitter.

The battery (B) thermal management system also comprises a heat exchanger in the cooling loop, able to dissipate the equivalent calories produced by the battery cells and prevent runaway (liquid-to-air or liquid-to-liquid).

The battery (B) thermal management system comprises a coolant circuit made of a channeled metal plate and said channeled metal plate is made of aluminum with welded joints.

Coolant Channels (2) are channels in which the coolant fluid in the battery (B) module (the battery subcomponent formed from a certain number of battery cells (6)) is cycled to remove excess heat energy. The internal structure of the Coolant Channels (2) may have a combination of fins and surfaces to increase its cooling capacity.

Self - Regulating heater (3) is a material that is able to dynamically and automatically adjust its heat power output according to its temperature due to its material properties. Self - Regulating heater (3) is used for performing the heating process without requiring a control circuit.

Manifold (4) is the external part where the Self - regulating Heater (3) and coolant channels (2) are located. The duty of the manifold (4) is to direct the coolant fluid to the coolant channels (2) and then allow its exit in order to return back to the system.

BUSBAR (electrical power distribution cables) (7) are flat electrical cables used to establish connection between Self - Regulating heaters (3).

Battery cell (6); is a Li - Ion battery cell.

The operating principle of the invention;

The invention is related to the thermal management of battery (B) modules of electric, hybrid and/or plug in hybrid vehicles. For this purpose, the thermal interface material (5) (here made of polymer material with improved thermal conductivity) acts as a thermal emitter to provide cooling or heating of battery cells (6) by coolant channels (2) and Self - Regulating heater (3) placed on it. This allows the heat provided by the Self - Regulating heater (3) to be distributed evenly across the battery cells (6). Unlike the existing systems, the use of the Self - Regulating heater (3) allows heating without requiring a control unit to control the heating function, and the heat energy is transferred directly to the numbered battery cell (6) element, making it more efficient than the existing solutions. The increased efficiency of the system is facilitated by the cooperation between the Self - Regulating heater (3) and the design of the coolant channels (2). The heating is provided by the Self - Regulating heater (3) and circulated by the coolant fluid in the coolant channels (2). Manifold (4) element is used to ensure the input and output of the coolant fluid (2) into and out of the coolant channel (2) elements. At the same time, BUSBARS (7) (electrical power distribution cables) are used for electrically connecting the Self - Regulating heater (3) to its power supply.

## Claims

1. A battery (B) thermal management system comprising
• a coolant circuit passing through the battery cells assembly,
• a self - regulating heater (3), that performs heating proportionately dependent upon the local temperature,
• a thermal interface material (5),
**characterized by comprising**
• coolant channels (2) through which the coolant fluid used for cooling functions in the battery (B) is cycled to remove excess heat energy, wherein the temperature control is done by the cooperation between the heat provided by the self - regulating heater (3) and the coolant channels (2).

2. The battery (B) thermal management system according to claim 1, **characterized in that** the coolant fluid is standard glycol/water mix, oil or other fluid optimized for heat transfer.

3. The battery (B) thermal management system according to claim 1, **characterized in comprising** a thermal interface material (5) used as a transfer element utilized for transferring the heat energy to the battery (B) and/or drawing heat energy from the battery (B).

4. The battery (B) thermal management system according to claim 1, **characterized in comprising** a self - regulating heater typically made as flat cable strip to minimize the assembly size.

5. The battery (B) thermal management system according to claim 1, **characterized in not comprising** devices for heating regulation, other than the properties of the self-regulating heater material.

6. The battery (B) thermal management system according to claim 1, **characterized in comprising** a coolant circuit made of a channeled metal plate.

7. **The battery (B) thermal management system according to claim 6, characterized in that** said **channeled metal plate is made of aluminum with welded joints.**

8. The battery (B) thermal management system according to claim 7, **characterized in comprising** the joints in aluminum welded by laser.

9. The battery (B) thermal management system according to claim 1, **characterized in comprising** a heat exchanger in the cooling loop, able to dissipate the equivalent calories being able to be produced by the battery cells and prevent runaway.

10. The battery (B) thermal management system according to claim 9, **characterized in comprising** a heat exchanger liquid to air or liquid to liquid.

11. The battery (B) thermal management system according to claim 3, **characterized in that** the thermal interface material (5) is made of polymer.
